# EUROPEAN PATENT APPLICATION

(11) **EP 4 811 069 A1**
(43) Date of publication of application: **23.09.2026**
(21) Application number: 26161289.9
(22) Date of filing: 12.03.2025
(51) Int. Cl.: G05D 1/485, G05D 1/49, G05D 1/654, B64C 27/00, G01C 23/00, B64C 13/18, B64C 27/10, B64C 27/57, G08G 5/00, G05D 105/22, G05D 109/25

(54) **DISPLAY DEVICE FOR A HELICOPTER OR FOR A FLIGHT SIMULATOR**

(62) Document number(s) of the earlier application(s) in accordance with Art. 76 EPC: 25425008.7 / 4 807 484
(71) Applicant: Leonardo S.p.A., 00195 Roma (IT)
(72) Inventor: CAPOCCHIANO, Stefano, 21017 SAMARATE (VA) (IT); GADARCO, Tommaso, 21017 SAMARATE (VA) (IT); ZAMPINI, Matteo, 21017 SAMARATE (VA) (IT)
(74) Representative: Studio Torta S.p.A.

(57) **Abstract**

A method for assisting the implementation of a real or simulated manoeuvre for a helicopter (1) comprising an autopilot (25) is described, comprising the steps of commanding an autopilot (25) to control the first, second and third flight control (15, 16, 17) so as to execute a descent and landing manoeuvre in spot hover conditions (LDG); comparing the first signal (S7) with a first target value (Vzₛₑₜ) of descent speed (Vz) and operating the first flight control (15) so as to maintain the speed (Vz) equal to the first target value (Vzₛₑₜ) during the landing manoeuvre in spot hover conditions (LDG); comparing the second signal (S14) with a second target value (γₛₑₜ) of the yaw angle (γ) and operating the third flight control (17) so as to maintain the yaw angle (γ) equal to the second target value (γₛₑₜ); and comparing the third signal (S15, S16) with a target landing position (Pxₛₑₜ, Pyₛₑₜ) and operating the second flight control (16) so as to set the helicopter (1) to the target landing position (Pxₛₑₜ, Pyₛₑₜ) during the descent and landing manoeuvre (LDG).

## Description

The present invention concerns a display device for a helicopter of for a flight simulator.

Helicopters are known to comprise:
- a fuselage;
- an engine system;
- a main rotor operated by the engine system, provided with a plurality of first blades, and adapted to provide the lift necessary for upthrust of the helicopter and the thrust necessary for control of the roll and pitch angle of the helicopter; and
- a tail rotor provided with a plurality of second blades rotating around a second axis and adapted to counter the reaction torque generated by the main rotor and allow the control of a yaw angle of the helicopter.

During rotation around the first axis, the ends of the first blades opposite the first axis trace an imaginary circumference identified as rotor disc.

Helicopters are further known to comprise:
- a first flight control known as "collective pitch", which can be actuated to simultaneously vary the pitching angle of all the first blades of the relative main rotor, thus adjusting the modulus of the lift generated by said main rotor and consequently controlling the altitude of the helicopter;
- a second flight control known as "cyclic pitch", which can be actuated to individually and cyclically vary the pitching angle of the first blades of the main rotor during their rotation around the rotation axis of the drive shaft, thus inclining the rotor disc and controlling the roll and pitch of the helicopter; and
- a third flight control normally consisting of pedals, which can be actuated to simultaneously vary the pitching angle of all the second blades of the tail rotor, thus adjusting the yaw angle of the helicopter.

The above-mentioned first, second and third flight control can be normally actuated by the pilot or by an autopilot.

However, due to their intrinsic criticality, landing manoeuvres in spot hover conditions are carried out only by the pilot in helicopters of known type.

The execution of said landing manoeuvre requires the pilot to visually and continuously control the area around the helicopter, and this is particularly difficult when the helicopter has to land in conditions of poor or zero visibility such as, for example, in the presence of sand or snow.

The need is felt in the sector to allow helicopters to land safely even when visibility conditions are poor or zero.

The present invention concerns a display device for the helicopter as claimed in claim 1.

For a better understanding of the present invention a preferred embodiment is described below, by way of non-limiting example and with reference to the attached drawings, in which:
- figure 1 is a perspective view of a helicopter produced according to the invention;
- figure 2 illustrates an automatic landing manoeuvre in spot hover conditions of the helicopter of figure 1;
- figure 3 illustrates different flight envelopes associated with respective operative functions of the helicopter of figure 1;
- figures 4 to 9 illustrate respective operative configurations of a display device made according to the invention and adapted to be implemented in the helicopter of figure 1;
- figures 10 and 11 illustrate in front and lateral view respectively a first control device made according to the invention and adapted to be implemented in the helicopter of figure 1;
- figures 12 and 13 illustrate in front and lateral view respectively a second control device made according to the invention and adapted to be implemented in the helicopter of figure 1; and
- figure 14 is a flow chart illustrating the steps of the method for assisting the implementation of a manoeuvre for a helicopter, which is not part of the present invention and is shown only for illustrative purposes.

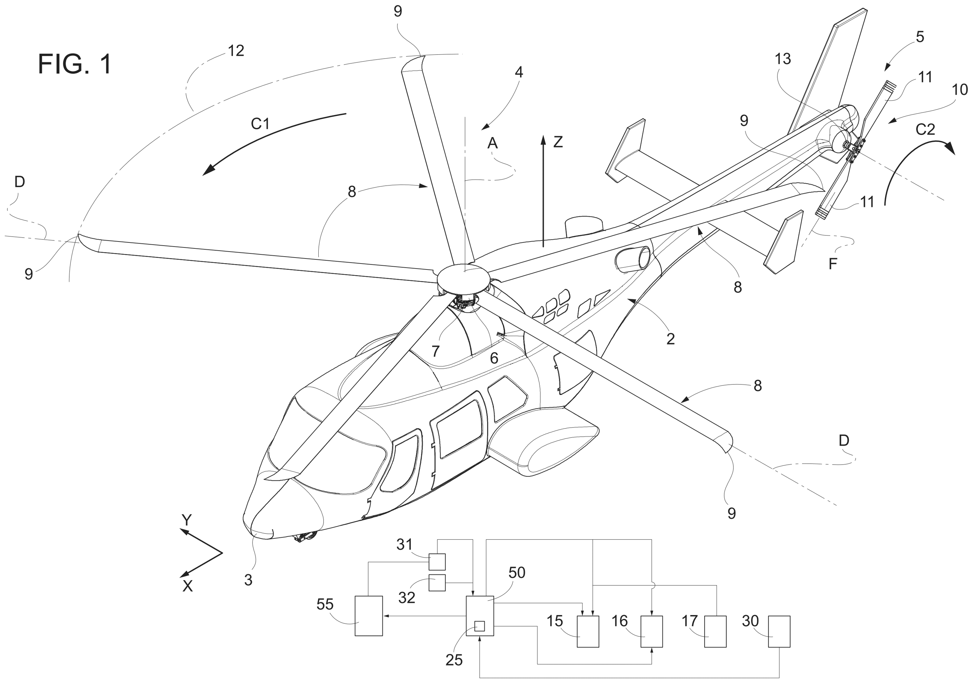

With reference to Figure 1, the number 1 indicates a helicopter. The helicopter 1 essentially comprises:
- a fuselage 2 with a nose 3 arranged at the front and a tail portion 5 arranged at the end opposite the nose 3;
- a main rotor 4 positioned at a top of the fuselage 2, operated by a motor unit not illustrated in detail and revolving around an axis A; and
- an anti-torque rotor 10 carried by the tail portion 5.

As known, operation of the rotor 4 allows the lift acting on the helicopter 1 to be regulated and consequently the altitude of the helicopter 1 to be varied.

In further detail, the rotor 4 comprises, in turn:
- a drive shaft 6 revolving around the axis A;
- a hub 7 rotated by the drive shaft 6; and
- a plurality of blades 8 articulated on the hub 7.

The blades 8 extend along respective axes D and comprise respective free ends 9.

During their rotation, the free ends 9 of the blades 8 of the rotor 4 trace an imaginary circumference indicated below in the present description as rotor disc 12.

Each blade 8 is mounted on the respective hub 7 so that its pitching angle can be varied, namely the angle defined with respect to a fixed direction coinciding with the axis D.

The anti-torque rotor 10 comprises, in turn, a hub 13 revolving around an axis E and a plurality of blades 11 articulated on the hub 13 so that the respective pitching angles around corresponding longitudinal axes F can be varied.

The rotation of the blades 8 around the axis A determines the application of a first torque C1 on the fuselage 2. Said first torque C1 tends to determine the rotation of the helicopter 1 around the axis A.

The anti-torque rotor 10 is provided to generate a second torque C2 with adjustable modulus and having a main component with direction opposite the first torque C1, so that the yaw angle of the helicopter 1 can be adjusted.

When the main component of said second torque C2 has a modulus equal to the first torque C1, the anti-torque rotor 10 prevents the rotation of the helicopter 1 around an axis Z substantially parallel to the axis A and passing through a centre of gravity G of the helicopter 1.

When the main component of said second torque C2 has a modulus lower or higher than the first torque C1, the anti-torque rotor 10 determines the rotation of the helicopter 1 with respect to the axis Z.

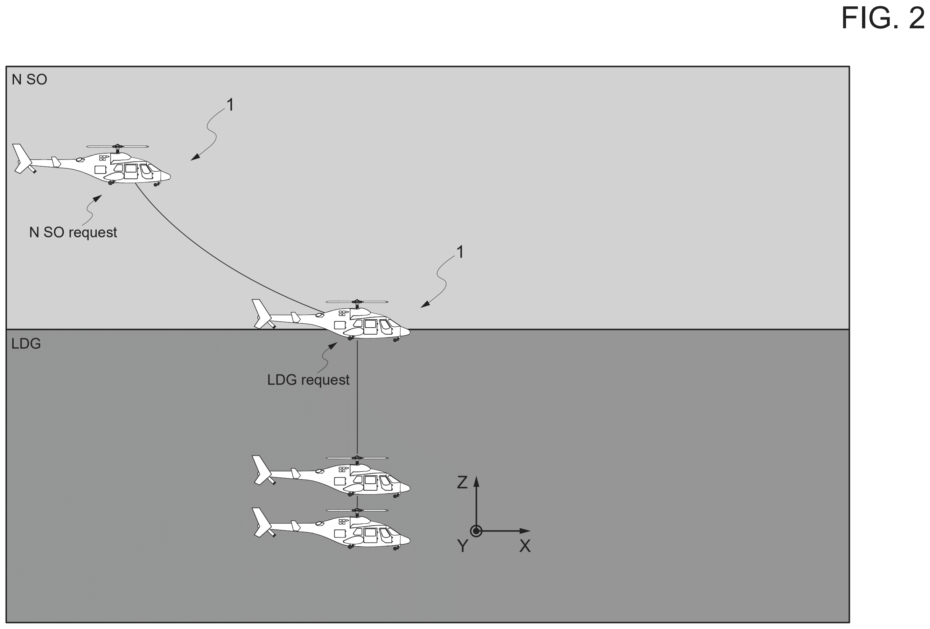

It should be noted that in the following part of the present description, expressions such as "at the top", "at the bottom", "at the front", "at the rear" and similar are used with reference to normal conditions of advanced flight or hovering of the helicopter 1 illustrated in Figure 2.

It is also possible to identify (Figure 1) three axes integral with the helicopter 1 and having origin in the centre of gravity G of the aircraft 1 formed of:
- a longitudinal axis X of the helicopter 1;
- an axis Y orthogonal to the axis X; and
- the axis Z orthogonal to the axes X, Y.

In a known manner, the rotations of the aircraft 1 around the axes X, Y, Z are associated with the following manoeuvres:
- rolling, namely rotation around the axis X;
- pitch, namely rotation around the axis Y; and
- yaw, namely rotation around the axis Z.

It is also possible to define three axes x, y, z (Figure 2) fixed with respect to the ground and orthogonal to one another. In particular, the axis z is arranged vertical and the axes x, y are arranged horizontal, orthogonal to one another and orthogonal to the axis z.

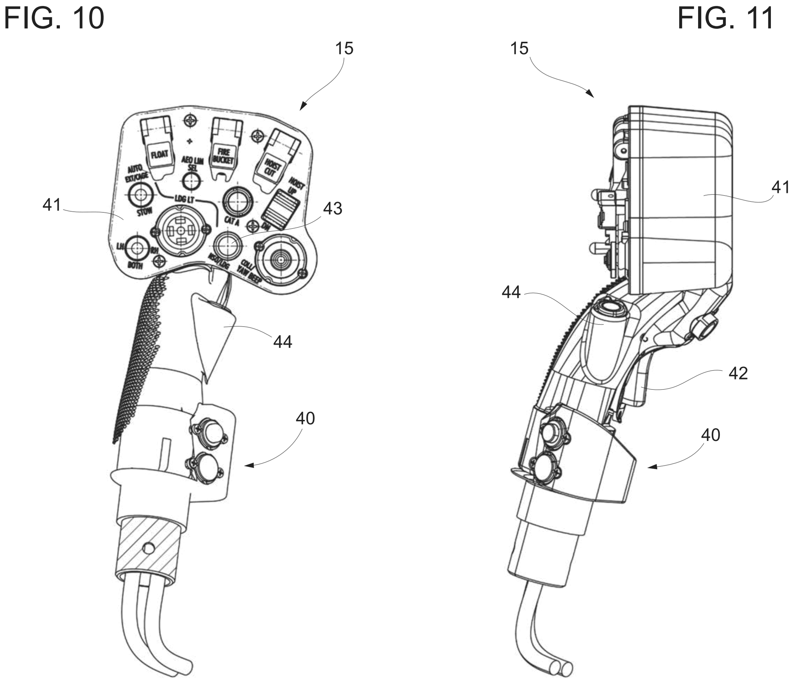

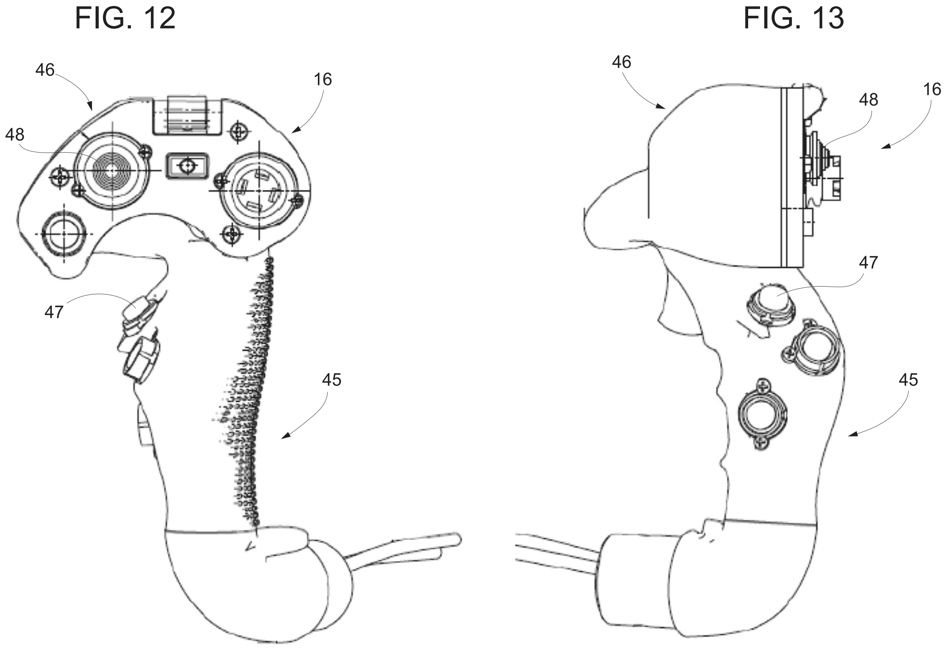

The helicopter 1 further comprises, in a known manner:
- a flight control 15 (Figures 10 and 11) known as collective pitch, which is actuated to set a desired collective pitch value on the blades 8;
- a flight control 16 (Figures 12 and 13) known as cyclic pitch, which is actuated to set a desired cyclic pitch value on the blades 8; and
- a flight control 17 (only schematically illustrated in Figure 1), pedals in the case illustrated, which is actuated to set a desired pitch value on the blades 11 of the anti-torque rotor 10.

More specifically, operation of the flight control 15 determines a simultaneous variation in the pitching angle of all the blades 8, thus varying the modulus of the thrust generated by the rotor 4.

The operation of the flight control 16 determines the cyclic variation of the pitching angle of each blade 8, during rotation around the axis A between a maximum value and a minimum value.

In this way, the flight control 16 determines a variation in the inclination of the rotor disc 12 and the generation of a thrust component orthogonal to the axis A of the rotor 4.

The variation of the pitching angle of the blades 11 of the anti-torque rotor 10 determines a variation in the thrust generated by the anti-torque rotor 10 parallel to the axis D and, consequently, in the torque C2.

The flight controls 15, 16, 17 can be operated manually by a pilot or by an autopilot 25 of the helicopter 1 only schematically illustrated in Figure 1.

In the case illustrated, the flight control 15 has a fully lowered position at which the lift generated by the main rotor 4 is minimum.

The flight controls 16, 17 have respective positions of minimum and maximum extension and respective neutral positions, in which they are respectively halfway between the corresponding minimum and maximum positions.

With reference to figures 10 and 11, the flight control 15 comprises, in particular:
- a lever 40 that can be operated to vary the collective pitch of the blades 8 of the rotor 4; and
- a knob 41 provided with a plurality of push-buttons, of which only buttons 42, 43, 44, necessary for the purposes of understanding the present invention will be described below.

The lever 40 is kept in a predetermined position by a plurality of dedicated springs or motors.

The button 42, known also as FTR, can be operated to disable the action of the above-mentioned dedicated springs or motors.

The button 44 can be operated to activate the automatic go-around function, namely abandonment of the landing operation guided by the autopilot 25.

In particular, the button 43 is arranged on the knob 41 and the relative function will be described in detail in the following part of the present description, and the buttons 42, 44 are arranged on the lever 40 of the flight control 15.

With reference to Figures 12 and 13, the flight control 16 comprises, in particular:
- a lever 45 which can be operated to vary the cyclic pitch of the blades 8 and consequently adjust the inclination of the rotor disc 12 of the rotor 4, and kept in a centred position by a plurality of dedicated springs or motors; and
- a knob 46 provided with a plurality of push-buttons, of which only buttons 47, 48, necessary for the purposes of understanding the present invention will be described below.

In particular, the button 47 can be operated to disable the action of the above-mentioned dedicated springs or motors.

The button 48 is a multi-position switch with forward, back, right and left positions adapted to control the references of the autopilot 25, if modifiable, and a central position.

The helicopter 1 further comprises, in a manner only schematically illustrated in Figure 1:
- an estimator 30 configured to generate a signal S1, associated with a condition of contact of the helicopter with the ground;
- a sensor 31 (only schematically illustrated in Figure 1) configured to generate signals S2, S3, S4 associated with corresponding Eulerian angles that define the orientation of corresponding axes X, Y, Z integral with the helicopter 1 with respect to relative axes x, y, z fixed with respect to the ground; signals S5, S6, S7 associated with velocity values Vx, Vy, Vz and signals S8, S9, S10 associated with respective values of the angular velocities wx, ωy, ωz of the helicopter 1 with respect to the axes x, y, z fixed with respect to the ground; and
- a sensor 32, for example a radar, configured to generate a signal S11 associated with an altitude RA of the helicopter 1 from the ground.

In the case illustrated, the estimator 30 is part of the autopilot 25 and is configured to generate the signal S1 also based on some of or all the signals generated by the sensor 31.

The helicopter 1 further comprises a control unit 50, also known in the sector as Flight Control System.

The control unit 50 defines the autopilot 25.

The autopilot 25 is programmed to continuously process, also based on the signals generated by the sensor 31:
- signals S12, S13, S14 associated respectively with current values of the roll, pitch and yaw angles α, β, γ of the helicopter 1; and
- a GROUNDSPEED signal associated with the modulus of the translation speed of the helicopter 1 with respect to the ground in the plane defined by the axes x and y, and a pair of signals S15, S16 associated with respective values of the coordinates Px, Py of the position of the helicopter 1 in the plane x, y in a predefined reference system.

Insofar as relevant for the purposes of the present invention, the control unit 50 is also programmed to give the pilot or the autopilot 25 authority over the flight controls 15, 16, 17, namely to make the flight controls 15, 16, 17 selectively actuatable by the pilot or the autopilot 25. The autopilot 25 is furthermore programmed to continuously process, also based on the signals generated by the sensor 31, control laws for the flight controls 15, 16, 17.

With particular reference to Figure 2, the helicopter 1 can be operated in an NSO mode in which it is at an altitude RA lower than a threshold value and near the ground. In this NSO mode, the control unit 50 gives the autopilot 25 authority over the flight controls 15, 16, 17.

The autopilot 25 is programmed to set the helicopter 1 to LDG mode, in which the autopilot 25 carries out a descent and landing manoeuvre in spot hover conditions; when the helicopter 1 is set to LDG mode, the autopilot 25 is programmed to:
- compare the signal S7 with a target value Vzₛₑₜ of descent speed Vz and operate the flight control 15 so as to maintain the descent speed Vz equal to the target value Vzₛₑₜ;
- compare the signal S14 with a target value γₛₑₜ of the yaw angle γ and operate the flight control 17 so as to maintain the yaw angle γ equal to the target value γₛₑₜ; and
- compare the signals S15, S16 with respective coordinates of a target position Pxₛₑₜ, Pyₛₑₜ of the helicopter 1 and operate the second flight control 16 so as to set said helicopter 1 to the target landing position with coordinates Pxₛₑₜ, Pyₛₑₜ.

In particular, the target value Vzₛₑₜ is variable in a programmed manner with the altitude RA of the helicopter 1.

The target value γₛₑₜ corresponds to the value of the yaw angle γ at the time of actuation of the autopilot 25 in LDG mode.

The coordinates of the target landing position Pxₛₑₜ, Pyₛₑₜ correspond to the coordinates of the position Px, Py of the helicopter 1 at the beginning of the descent and landing manoeuvre LDG.

More precisely, the autopilot 25 is programmed to act on the flight control 16 so as to maintain:
- the yaw angle γ within the range of angles between γₛₑₜ-Δγ and γₛₑₜ+Δγ, in which Δγ is a predefined value; and
- the coordinates of the position Px, Py within respective intervals between Pxₛₑₜ-ΔPx, Pxₛₑₜ+ΔPx and Pyₛₑₜ-ΔPy, Pyₛₑₜ+ΔPy in which ΔPx and ΔPy are respective predefined values.

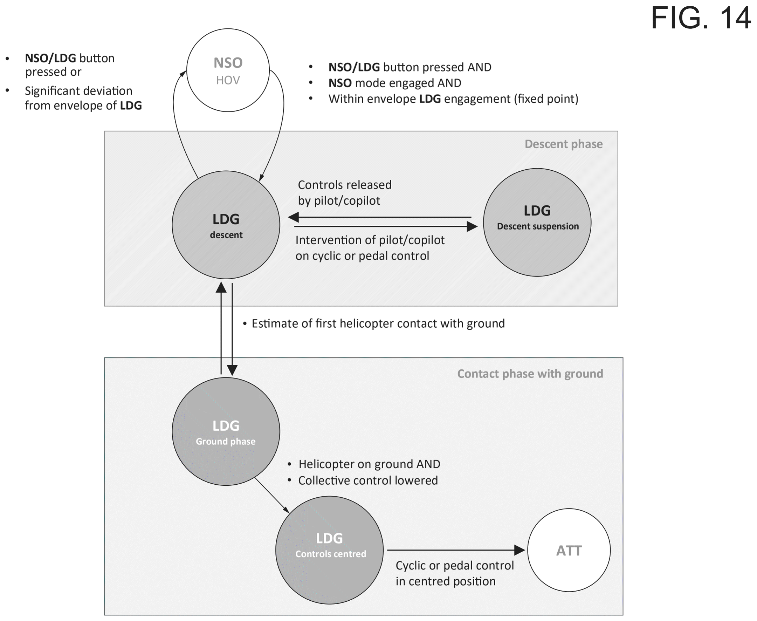

With reference to Figure 14, the autopilot 25 is programmed to:
- set the flight control 15 to a position in which the rotor 4 generates the minimum lift value, in particular in a fully lowered position, and operate the flight controls 16, 17 to control the angular velocities ωx, ωy, ωz, when the estimator 30 generates the signal S1, namely when the helicopter 1 has touched the ground (LDG Phase GROUND); and
- set the flight controls 16, 17 to respective centred positions, in a centring phase of the flight controls 16, 17 subsequent to the phase in which the helicopter 1 has touched the ground.

The autopilot 25 is further programmed to terminate the LDG mode when the flight controls 16 and 17 are in the respective centred positions and the helicopter 1 is on the ground.

In particular, the autopilot 25 is programmed, during the LDG mode:
- to suspend the descent and maintain the descent speed Vz at null value, if the pilot/copilot operates the flight controls 16, 17; and
- to resume the LDG mode and reset the descent speed Vz to the target value Vzₛₑₜ, if the pilot/copilot ceases to operate the flight controls 16, 17.

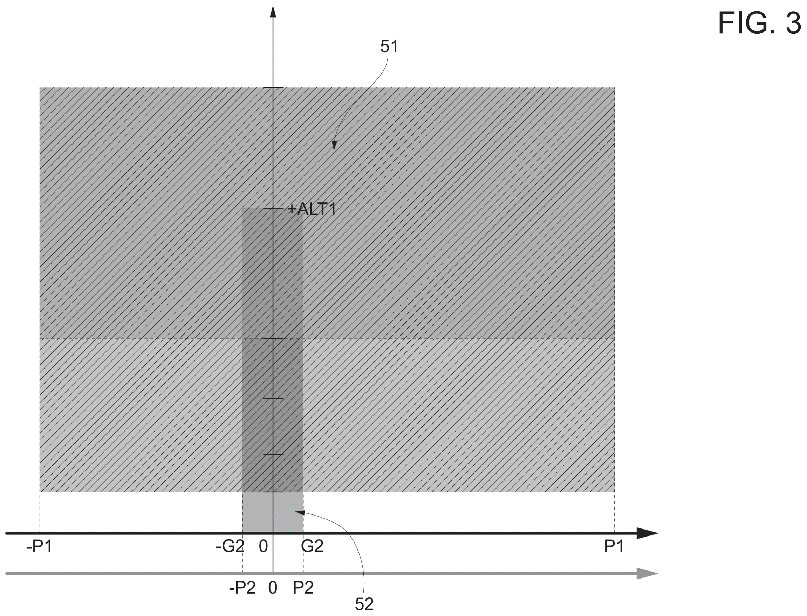

With reference to Figure 3, the NSO mode is associated with a flight envelope 51 of the helicopter 1.

The flight envelope 51 is defined by:
- values of the altitude RA higher than a value ALT2 and lower than the value ALT1; and
- GROUNDSPEED values between -G1 and + G1.

The LDG mode is associated with a flight envelope 52 defined by:
- values of the altitude RA of the helicopter 1 less than a value ALT1;
- GROUNDSPEED values between -G2 and + G2, with G2 less than G1 in absolute value; and
- distance values between the position Px, Py of the helicopter and the position Pxₛₑₜ, Pyₛₑₜ of the landing area between -P2 and + P2.

In greater detail, the control unit 50 is programmed to allow transition of the helicopter 1 from the NSO mode to the LDG mode after the button 43 of the flight control 15 has been pressed and if:
- the helicopter 1 is in NSO mode; and
- the helicopter 1 is in the flight envelope 52 associated with the LDG mode.

The autopilot 25 is furthermore programmed to automatically disable the LDG mode, enable the NSO mode, and remain in spot hover conditions if the helicopter 1 exceeds the flight envelope 52 in terms of values of the altitude RA, GROUNDSPEED or position relative to the landing site greater than respective threshold values; or
- after the button 43 of the flight control 15 has been pressed. The autopilot 25 is further programmed to perform a manoeuvre of abandonment of the landing site if the pilot/copilot presses the button 44 of the flight control 15.

In particular, in said manoeuvre, known in the sector as go-around manoeuvre, the autopilot 25 takes the helicopter 1 back to a safe altitude RA, sets a climbing speed Vz sufficient to ascend safely from the landing site and sets cruising speeds Vx, Vy.

The autopilot 25 is furthermore programmed to suspend the landing manoeuvre and remain in spot hover if the pilot/copilot presses the button 43 of the flight control 15 or the central position of the multi-position switch of the button 48 of the flight control 16.

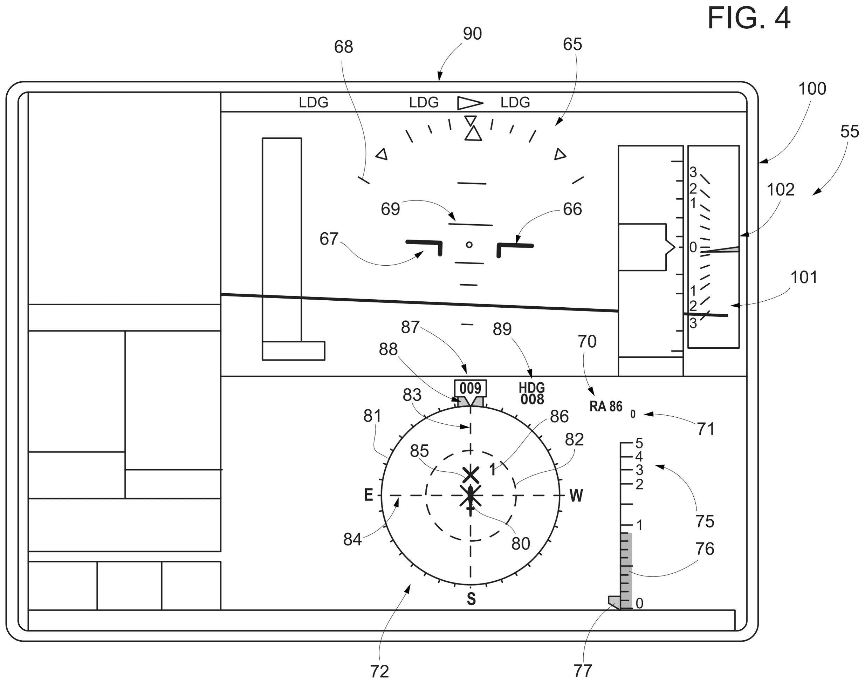

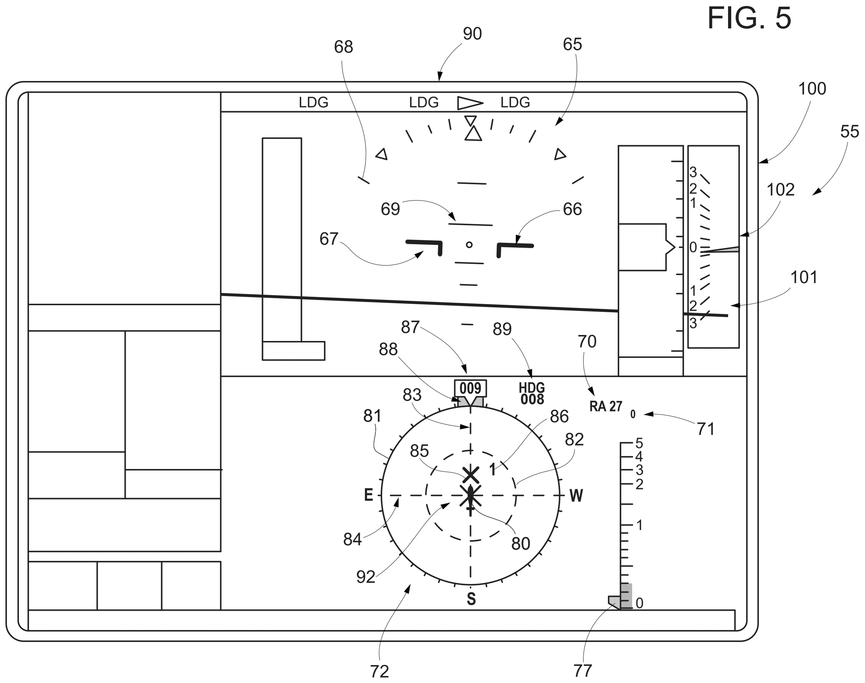

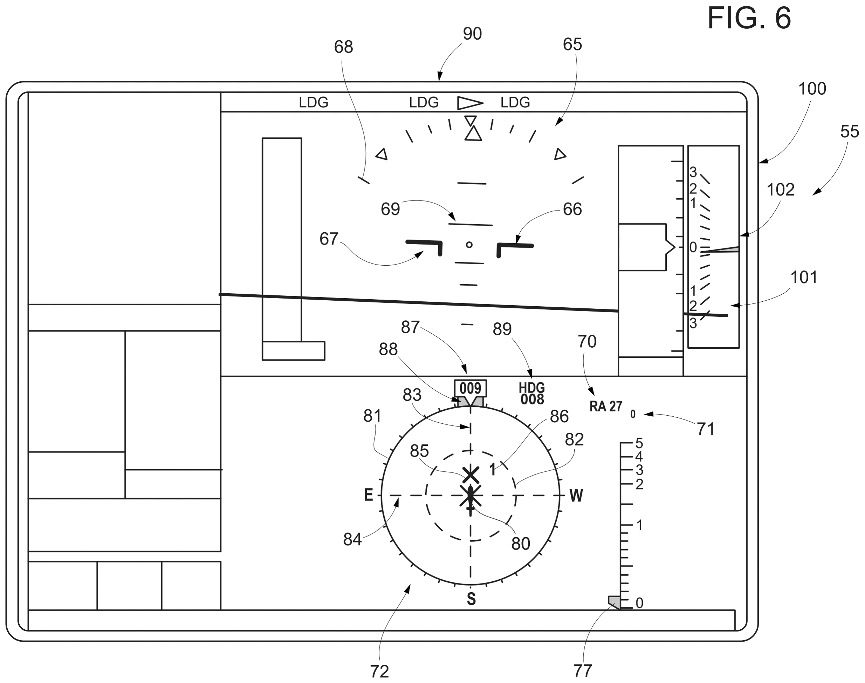

The helicopter 1 further comprises a display device 55 arranged inside a cabin of the helicopter 1 and illustrated in Figures 4 to 9.

The display device 55 is operatively connected to the sensor 32 and controlled by the control unit 50.

The display device 55 comprises (Figures 4 to 9):
- an indicator 65 known as Attitude Direction Indicator "ADI"; and
- a gyro-directional indicator 72 known as Heading Indicator.

In further detail, the indicator 65 integrates the functions of attitude indicator or "artificial horizon", and Flight Director, namely it provides a representation of the optimal flight trajectory to maintain a desired flight path.

In greater detail, the indicator 65 comprises:
- an indication 66 representing the reference of the helicopter 1; and
- a circular area 67 with centre O and rotating around the centre O with respect to the indication 66, based on the inclination angle of the helicopter 1 with respect to the axis X, namely the roll angle α of the helicopter 1.

The area 67 further comprises:
- an angular graduated scale 68, associated with the angle between the axis X of the helicopter 1 and a fixed direction, based on the rotation of the helicopter 1 with respect to its axis X, namely the roll angle α of the helicopter 1; and
- a linear scale 69 associated with the angle between the axis Y of the helicopter 1 and a fixed direction, based on the rotation of the helicopter 1 with respect to its axis Y, namely the pitch angle β of the helicopter 1.

The position of the indication 66 on the scales 68 and 69 is representative of the respective roll angle α and pitch angle β of the helicopter 1.

The indicator 72 is adapted to provide the pilot with an indication of the heading angle of the helicopter 1, namely the angle between the longitudinal axis X of the helicopter 1 and a fixed direction with respect to the ground.

The indicator 72 further comprises:
- an alphanumeric indication 70 associated with the altitude RA of the helicopter 1 from the ground and detected by the sensor 32; and
- an alphanumeric indication 71 associated with a target value RAₛₑₜ for the altitude RA of the helicopter 1. When the helicopter 1 is in LDG mode, the target value RAₛₑₜ for the altitude RA of the helicopter 1 is equal to zero.

The indicator 72 further comprises:
- a graduated scale 75 showing different values of the altitude RA of the helicopter 1; and
- an area 76 arranged along the graduated scale 75 and having extension associated with the actual altitude RA detected by the sensor 32;
- an area 77 arranged along the graduated scale 75 and having extension associated with the target value RAₛₑₜ for the altitude RA of the helicopter 1 equal to a null altitude in LDG mode.

The areas 76, 77 are rectangular in the case illustrated.

The indicator 72 comprises, in turn:
- an indication 80 representing the reference of the helicopter 1; and
- a circular centre area 81 on the indication 80 and on which the cardinal points N, S, E, W are shown.

The centre of the area 81 represents the coordinates Pxₛₑₜ, Pyₛₑₜ of the target landing position on the ground.

The indicator 72 further comprises:
- a circular centre area 82 on the indication 80, concentric to the area 81 and arranged inside the area 81;
- a segment 83 joining the cardinal points N-S; and
- a segment 84 joining the cardinal points E-W and orthogonal to the segment 83;
- a graphic indication 85 shown on the area 80 and representing the coordinates Px, Py of the actual position of the helicopter 1 with respect to the coordinates Pxₛₑₜ, Pyₛₑₜ from the target landing position on the ground of the helicopter 1; and
- an alphanumeric indication 86 representing the distance between the coordinates Px, Py of the actual position of the helicopter 1 and the coordinates Pxₛₑₜ, Pyₛₑₜ from the target landing position on the ground of the helicopter 1.

The indicator 72 further comprises:
- an alphanumeric indication 87 associated with the yaw angle γ of the helicopter 1;
- a graphic indication 88 associated with the reference value γₛₑₜ of the yaw angle γ of the helicopter 1; and
- an alphanumeric indication 89 associated with the reference value γₛₑₜ of the yaw angle γ of the helicopter 1. In particular, the indications 70, 71 are arranged laterally to the indicator 72. The indication 70 is arranged above the indication 71.

The indicator 72 and the indications 70, 71 are arranged below the indicator 65.

The indication 88 is displayed as an angular area arranged on the circumference of the indication 81.

The indication 87 is arranged in the upper part of the area 81.

The indication 89 is arranged laterally to the indication 87. Advantageously, the control unit 50 is furthermore programmed to display on the display device 55 an indication 90 when the helicopter 1 is in the LDG mode (Figures 4 to 8).

In particular, the indication 90 is alphanumeric and is displayed above the indicator 65. In the case illustrated, the indication 90 corresponds to the wording "LDG".

The control unit 50 is further programmed to display on the display device 55, when the helicopter 1 is in LDG mode, an indication 100 associated with the descent speed Vz of the helicopter 1.

The indication 100 comprises, in particular:
- a graduated scale 102 showing different values of the descent speed Vz of the helicopter 1; and
- a pointer 101 movable along the graduated scale 102 and arranged corresponding to the actual value of the descent speed Vz.

In particular, the indications 70, 76, 80, 101 are displayed on the display device 55 in a first colour, green in the case illustrated.

The indications 77, 85, 88, 89 are displayed on the display device 55 in a second colour different from the first colour, magenta in the case illustrated.

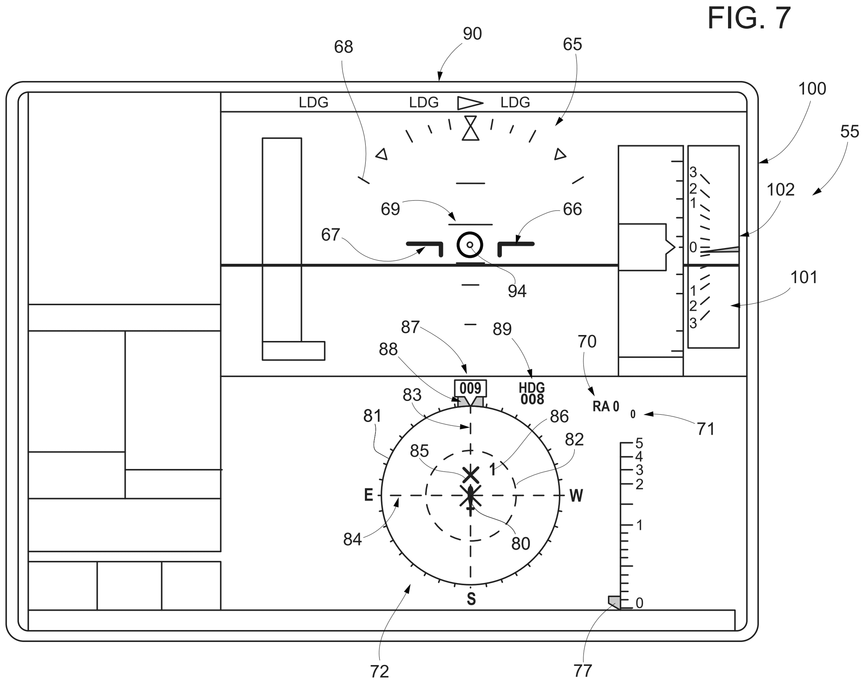

With reference to Figure 7, the control unit 50 is programmed, when the helicopter 1 is in LDG mode and the simulator 30 generates the signal S1, namely when the helicopter 1 has touched the ground, to display on the display device 55 a pair of indications 93, 94 representative of the fact that the autopilot 25 has not yet set the flight control 15 to the fully lowered position.

In particular, the indication 93 comprises an icon superimposed on the scale 68 of the indicator 65.

The indication 94 comprises an icon superimposed on the scale 69 of the indicator 65.

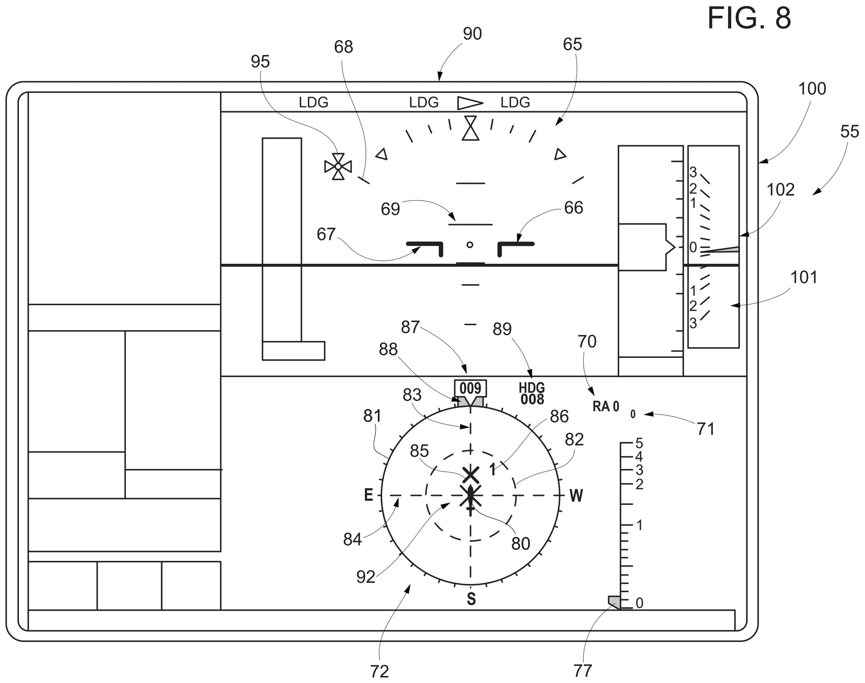

With reference to Figure 8, the control unit 50 is programmed, when the helicopter 1 is in LDG mode and has touched the ground and when the autopilot 25 has set the flight control 15 to the fully lowered position and has not yet set the flight control 16 to the centred position, to display on the display device 55 an indication 95 in the form of an icon.

In the case illustrated, the indication 95 is shown laterally to the indicator 65.

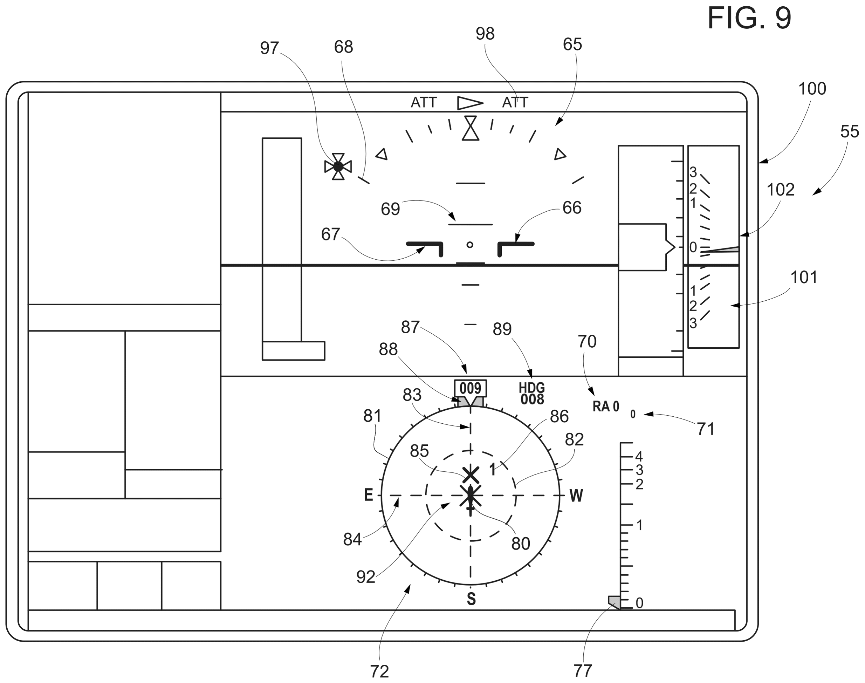

With reference to figure 9, the control unit 50 is programmed, when the helicopter 1 is in LDG mode and has touched the ground and the autopilot 25 has re-set the flight control 16 to the centred position to display on the display device 55:
- an indication 97 in icon form different from the indication 95;
- an alphanumeric indication 98 in place of the indication 90. The indication 97 is also shown laterally to the indicator 65. The indication 98 corresponds to the wording ATT in the case illustrated.

The operation of the helicopter 1 is illustrated starting from a condition in which the helicopter 1 is in NSO mode, namely within the flight envelope 51.

In said NSO mode, the autopilot 25 operates the flight controls 15, 16, 17 to control the helicopter 1.

The sensor 31 generates:
- the respective signals S2, S3, S4 associated with corresponding Eulerian angles that define the orientation of the corresponding axes X, Y, Z integral with the helicopter 1 with respect to relative axes x, y, z fixed with respect to the ground; and
- respective signals S5, S6, S7 associated with velocity values Vx, Vy, Vz and respective signals S8, S9, S10 associated with respective angular velocity values wx, ωy, ωz of the helicopter 1 with respect to the axes x, y, z fixed with respect to the ground. The sensor 32 generates the signal S11 associated with the altitude RA of the helicopter 1 with respect to the ground.

The indicators 65, 72 of the display device 55 provide the pilot with respective indications relative to the roll angle α, pitch angle β and yaw angle γ of the helicopter 1.

If the pilot wishes to perform a landing manoeuvre in spot hover conditions assisted by autopilot, he presses the button 43 of the flight control 15.

The autopilot 25 verifies that the helicopter 1 is in NSO mode, and that the helicopter 1 is within the flight envelope 52.

If the helicopter 1 is in NSO mode and within the flight envelope 52, the autopilot 25 sets the helicopter 1 to LDG mode.

The display device 55 displays the indication 90 above the indicator 65 and the indications 70, 76, 77, 80, 85, 86, 87, 88, 89 at the indicator 72 (Figures 4 to 9).

In the LDG mode of the helicopter 1, the autopilot 25:
- compares the signal S7 with a target value Vzₛₑₜ of descent speed Vz and operates the flight control 15 so as to maintain the descent speed Vz equal to the target value Vzₛₑₜ;
- compares the signal S14 with a desired value γₛₑₜ of the yaw angle γ and operates the flight control so as to maintain the yaw angle γ equal to the target value Yₛₑₜ; and
- compares the signals S15, S16 with respective coordinates of a desired position Pxₛₑₜ, Pyₛₑₜ of the helicopter 1 and operates the flight control 16 so as to set said helicopter 1 to the target landing position of coordinates Pxₛₑₜ, Pyₛₑₜ.

In particular, the target value γₛₑₜ and the coordinates Pxₛₑₜ, Pyₛₑₜ of the target landing position correspond respectively of the yaw angle γ and to the coordinates Px, Py at the moment of actuation of the LDG mode.

More specifically, the autopilot 25 operates the flight controls 16, 17 so as to maintain the yaw angle γ within a range of angles between γₛₑₜ-Δγ and γₛₑₜ+Δγ, and the coordinates of the position Px, Py are within respective ranges between Pxₛₑₜ-ΔPx, Pxₛₑₜ+ΔPx and Pyₛₑₜ-ΔPy, Pyₛₑₜ+ΔPy.

With reference to Figure 4, during the descent phase of the helicopter 1 in spot hover conditions, the display device 55 displays:
- the indications 70, 71 associated with the altitude RA of the helicopter 1;
- the indications 85, 86 representative of the distance between the coordinates Px, Py of the actual position of the helicopter 1 and the coordinates Pxₛₑₜ, Pyset from the target landing position on the ground of the helicopter 1;
- the indication 87 associated with the yaw angle γ of the helicopter 1; and
- the indications 88, 89 associated with the reference value γₛₑₜ of the yaw angle γ of the helicopter 1.

The pointer 101 indicates the actual value of the descent speed Vz of the helicopter 1.

When the estimator 30 generates the signal S1, namely when the helicopter 1 has touched the ground, the autopilot 25 firstly sets the flight control 15 to the fully lowered position and then sets the flight control 16 to the centred position (Figure 14).

In further detail, when the helicopter 1 is on the ground, the display device 55 displays,:
- the indications 93, 94 when the flight control 15 is not yet in the fully lowered position (Figure 7);
- the indication 95 when the flight control 15 is in the fully lowered position and the flight controls 16, 17 are not yet set to the centred position (Figure 8); and
- the indication 97 when the flight controls 16, 17 are in the centred position and the indication 98 when the LDG manoeuvre has been completed (Figure 9).

The control unit 50 suspends the LDG mode and restores authority to the pilot over the flight controls 15, 16, 17, once the autopilot 25 has set the flight controls 16 and 17 to their respective centred positions.

The autopilot 25 suspends the descent and maintains the descent speed Vz at null value, if the pilot/copilot operates the flight controls 16, 17.

The autopilot 25 resumes the LDG mode and re-sets the descent speed Vz to the target value Vzₛₑₜ, if the pilot ceases operating the flight controls 16, 17.

The autopilot 25 is further programmed to automatically disable the LDG mode and enable the NSO mode and remain in spot hover conditions, if:
- the helicopter 1 exceeds the flight envelope 52, and the values of the altitude RA, GROUNDSPEED or position relative to the landing site are greater than respective threshold values; or
- the button 43 of the flight control 15 has been pressed.

From an examination of the characteristics of display device 55 according to the invention, the advantages it offers are evident. The display device 55 displays the indications 70, 71, 75 76, 80, 82, 85, 86, 87, 88, 89, 93, 94, 95, 97, 98, 100, 101 in a position near the indications 65, 72 when the helicopter 1 is in LDG mode and the autopilot 25 actuates the flight controls 15, 16, 17 (Figures 4 to 9). In this way, the pilot is continuously informed of the different operating phases of the helicopter 1 during the LDG mode, without having to switch his attention from the indications 65, 72 associated respectively with the roll angle α and the pitch angle β of the helicopter 1 and with the angle defined by the axis X with fixed ground direction. This reduces pilot fatigue and increases overall safety of the helicopter 1.

Lastly it is clear that modifications and variations can be made to the display device 55 previously described without departing from the protective scope of the present invention.

In particular, the display device 55 could be implemented, instead of in the helicopter 1, in a flight simulator to simulate the LDG spot hover landing manoeuvre.

## Claims

1. A display device (55) for a helicopter (1) or for a flight simulator, comprising:
- a first indication (67) associated with the actual or simulated position of the horizon; and
- a second indication (66) associated with the actual or simulated attitude of said helicopter (1) with respect to said horizon;
- a third indication (90) selectively displayable and associated with the fact that an autopilot (25) has been activated during an actual or simulated landing manoeuvre in spot hover conditions (LDG);
**characterized in that** it comprises:
- a fourth indication (98) selectively displayable on said first indication (66) and associated with the fact that said autopilot (25) has terminated said actual or simulated landing manoeuvre in spot hover conditions (LDG);
- a fifth indication (93, 94) selectively displayable on said first indication (66) and associated with the fact that said helicopter (1) has reached the ground and that said first flight control (15) is not yet in the position of minimum lift; and/or
- a sixth indication (95) selectively displayable on said first indication (66) and associated with the fact that said helicopter (1) has reached the ground, that said first flight control (15) is in said position of minimum lift, and that said second flight control (16) is not yet in said neutral position; and
- a seventh indication (97) selectively displayable on said first indication (66) and associated with the fact that said helicopter (1) has reached the ground and that said second flight control (16) is in said neutral position.

2. The display device according to claim 1, **characterized in that** it comprises:
- an eight indication (72) adapted to provide the pilot with information associated with the direction angle defined between a first longitudinal axis (X) of said helicopter (1) and a second axis fixed with respect to the ground;
- a ninth indication (85, 86) associated with a first value of the distance between the coordinates of an actual position (Px, Py) of said helicopter (1) and the coordinates (Pxₛₑₜ, Pyₛₑₜ) of a target landing position;
- a tenth indication (87) associated with a second current value of the yaw angle (γ); and
- at least an eleventh and a twelfth indication (88, 89) associated with a third target value (γₛₑₜ) of the yaw angle (γ);
said tenth and eleventh indication (87; 88, 89) being displayable on said eigth indication (72).

3. The display device according to claim 1 or 2, **characterized in that** it further comprises:
- a thirteenth indication (70, 77) displayable laterally to said second indication (72) and associated with a fourth target value (RAₛₑₜ) of an altitude (RA) of said helicopter (1).

4. A helicopter (1) comprising:
- a main rotor (4) rotating around a first axis (A) and comprising a plurality of first blades (8) extending along respective second axes (D); said first blades (4) being inclinable around the relative second axes (D) so as to adjust the respective first pitching angles;
said first blades (8) comprising respective first ends (9) opposite said first axis (A) and defining a rotor disc (12);
- an anti-torque rotor (10) rotating around a third axis (E) and comprising a plurality of second blades (11) extending along respective fourth axes (D); said second blades (11) being inclinable around the relative fourth axes (D) so as to adjust the respective second pitching angles;
- a first flight control (15) that can be operated to collectively adjust said first pitching angles of said first blades (4);
- a second flight control (16) that can be operated to adjust the inclination of the relative said rotor disc (12) around said third axis (E);
- a third flight control (17) that can be operated to collectively adjust said second pitching angles of said second blades (11);
- an autopilot (25) operatively connected to said first, second and said third flight control (15, 16, 17);
- a first sensor (31) adapted to generate at least a first signal (S7) associated with a speed (Vz) of said helicopter (1) parallel to an axis (z) arranged, in use, vertical, a second signal (S14) associated with a yaw angle (γ) of said helicopter (1), and a third signal (S15, S16) associated with a position (Px, Py) of said helicopter (1) in a plane arranged, in use, horizontal;
**characterized in that** said autopilot (25) can be selectively operated to execute a descent and landing manoeuvre of said helicopter (1) in spot hover condition (LDG);
said autopilot (25) being programmed to:
- detect said first signal (S7) and operate said first flight control (15), so as to maintain said descent speed (Vz) equal to a reference value (Vzset) during said manoeuvre;
- detect said second signal (S14) and operate said third flight control (17) so as to maintain constant said yaw angle (γ) during said manoeuvre; and
- detect said third signal (S15, S16) and operate said second flight control (16) so as to set said helicopter (1) to said target landing position (Pxₛₑₜ, Pyₛₑₜ) during said descent and landing manoeuvre (LDG);
said helicopter (1) further comprising:
- a second sensor (31) configured to generate a fourth signal (S11) associated with an altitude (RA) of said helicopter (1) with respect to the ground; and
said autopilot (25) being programmed to: set said first flight control (15) to a position of minimum lift generated by said first blades (8), when said fourth signal (S11) and said first signal (S7) correspond to a condition of contact of said helicopter (1) with the ground;
set said second flight control (16) to a first neutral position said third flight control (17) after having set said first flight control (15) to said position of minimum lift;
ascertain that said helicopter (1) is within a first flight envelope (51) associated with a first flight condition near the ground (NSO);
ascertain that said helicopter (1) is within a second flight envelope (52) associated with a second condition associated with said descent and landing manoeuvre in spot hover conditions (LDG);
said second flight envelope (52) being within said first flight envelope (51);
said first flight control (15) comprising a button (43) operable to command said autopilot (25) to determine the transition of said helicopter (1) from a flight condition near the ground (NSO) to a second condition of execution of said descent and landing manoeuvre in spot hover conditions (LDG) if within said second flight envelope (52);
said autopilot (25) being programmed to allow said transition if said helicopter (1) is in said flight condition near the ground (NSO) and is within said second flight envelope (52);
said first flight envelope (51) being defined by:
- third values of the altitude (RA) of said helicopter (1) greater than a relative threshold value (ALT2); and
- fourth values of a speed relative to the ground (GROUNDSPEED) within a second range (-G1; G1);
said second flight envelope (52) being defined by:
- fifth values of the altitude (RA) of said helicopter (1) below a relative threshold value (ALT1); and
- sixth values of the speed relative to the ground (GROUNDSPEED) within a third range (-G2, + G2); said third range (-G2; G2) being comprised in said second range (-G1; G1);
said autopilot (25) being further configured to determine the transition of said helicopter (1) from said second condition of execution of said descent and landing manoeuvre in spot hover conditions (LDG) to said first flight condition near the ground (NSO) and remaining in said spot hover condition, if said helicopter (1) is outside said second flight envelope (52) in terms of values above a respective threshold value during said condition of execution of said descent and landing manoeuvre (LDG) or following operation of said button (43) of said first flight control (15) during the condition of execution of said descent and landing manoeuvre in spot hover conditions (LDG);
said helicopter further comprising a display device (55) according to any one of the foregoing claims.

5. The helicopter according to claim 4, **characterized in that** said first control (15) comprises, in turn:
- a lever (40) that can be operated to collectively adjust said first pitching angles of said first blades (8) of said first rotor (4); and
- a knob (41) comprising at least a button (43) operatively connected to said autopilot (25) and which can be operated to command said autopilot (25) to execute said descent and landing manoeuvre of said helicopter (1) in a spot hover condition (LDG).

6. The helicopter according to claim 4 or 5, **characterized in that** it comprises:
- a second physical or virtual sensor (30) configured to generate a fourth signal (S1) associated with a condition of contact of the helicopter with the ground; and
- a third sensor (32) configured to generate a fifth signal (RA) associated with an altitude of said helicopter 1 with respect to the ground;
- said autopilot (24) being operatively connected to said first, second and third sensor (31, 30, 32);
said autopilot (25) being programmed to:
- control said first, second and third flight control (15, 16, 17), so as to execute a descent and landing manoeuvre in spot hover conditions (LDG).

## Amended claims

### Amended claims in accordance with Rule 137(2) EPC.

1. A helicopter (1) comprising:
- a main rotor (4) rotating around a first axis (A) and comprising a plurality of first blades (8) extending along respective second axes (D); said first blades (8) being inclinable around the relative second axes (D) so as to adjust the respective first pitching angles; said first blades (8) comprising respective first ends (9) opposite said first axis (A) and defining a rotor disc (12);
- an anti-torque rotor (10) rotating around a third axis (E) and comprising a plurality of second blades (11) extending along respective fourth axes (F); said second blades (11) being inclinable around the relative fourth axes (F) so as to adjust the respective second pitching angles;
- a first flight control (15) that can be operated to collectively adjust said first pitching angles of said first blades (8);
- a second flight control (16) that can be operated to adjust the inclination of the relative said rotor disc (12);
- a third flight control (17) that can be operated to collectively adjust said second pitching angles of said second blades (11);
- an autopilot (25) operatively connected to said first, second and said third flight control (15, 16, 17);
- a first sensor (31) adapted to generate at least a first signal (S7) associated with a speed (Vz) of said helicopter (1) parallel to an axis (Z) arranged, in use, vertical, a second signal (S14) associated with a yaw angle (γ) of said helicopter (1), and a third signal (S15, S16) associated with a position (Px, Py) of said helicopter (1) in a plane arranged, in use, horizontal; said autopilot (25) being selectively operable to execute a descent and landing manoeuvre of said helicopter (1) in spot hover condition (LDG);
**characterized in that** said autopilot (25) is programmed to:
- detect said first signal (S7) and operate said first flight control (15), so as to maintain said descent speed (Vz) equal to a reference value (Vzset) during said manoeuvre;
- detect said second signal (S14) and operate said third flight control (17) so as to maintain constant said yaw angle (γ) during said manoeuvre; and
- detect said third signal (S15, S16) and operate said second flight control (16) so as to set said helicopter (1) to said target landing position (Pxₛₑₜ, Pyₛₑₜ) during said descent and landing manoeuvre (LDG);
said helicopter (1) further comprising:
- a second sensor (32) configured to generate a fourth signal (S11) associated with an altitude (RA) of said helicopter (1) with respect to the ground;
said autopilot (25) being programmed to:
set said first flight control (15) to a position of minimum lift generated by said first blades (8), when said fourth signal (S11) and said first signal (S7) correspond to a condition of contact of said helicopter (1) with the ground;
set said second flight control (16) and said third flight control (17) to respective first neutral position after having set said first flight control (15) to said position of minimum lift;
ascertain that said helicopter (1) is within a first flight envelope (51) associated with a first flight condition near the ground (NSO);
ascertain that said helicopter (1) is within a second flight envelope (52) associated with a second condition associated with said descent and landing manoeuvre in spot hover conditions (LDG); said second flight envelope (52) being within said first flight envelope (51);
said first flight control (15) comprising a button (43) operable to command said autopilot (25) to determine the transition of said helicopter (1) from a flight condition near the ground (NSO) to a second condition of execution of said descent and landing manoeuvre in spot hover conditions (LDG) if said helicopter (1) is within said second flight envelope (52);
said autopilot (25) being programmed to allow said transition if said helicopter (1) is in said flight condition near the ground (NSO) and is within said second flight envelope (52);
said first flight envelope (51) being defined by:
- third values of the altitude (RA) of said helicopter (1) greater than a relative threshold value (ALT2); and
- fourth values of a speed relative to the ground (GROUNDSPEED) within a second range (-G1; G1);
said second flight envelope (52) being defined by:
- fifth values of the altitude (RA) of said helicopter (1) below a relative threshold value (ALT1); and
- sixth values of the speed relative to the ground (GROUNDSPEED) within a third range (-G2, + G2); said third range (-G2; G2) being comprised in said second range (-G1; G1);
said autopilot (25) being further configured to determine the transition of said helicopter (1) from said second condition of execution of said descent and landing manoeuvre in spot hover conditions (LDG) to said first flight condition near the ground (NSO) and remaining in said spot hover condition, if said helicopter (1) is outside said second flight envelope (52) or a seventh value of the altitude (RA), an eight value of said speed relative to the ground (GROUNDSPEED) or a ninth value of a position relative to the landing seat are greater than respective threshold values during said condition of execution of said descent and landing manoeuvre (LDG) or following operation of said button (43) of said first flight control (15) during the condition of execution of said descent and landing manoeuvre in spot hover conditions (LDG);
said helicopter (1) further comprising a display device (55) ;
said display device (55) comprising, in turn:
- a first indication (67) associated with the actual or simulated position of the horizon; and
- a second indication (66) associated with the actual or simulated attitude of said helicopter (1) with respect to said horizon;
- a third indication (90) selectively displayable and associated with the fact that an autopilot (25) has been activated during an actual or simulated landing manoeuvre in spot hover conditions (LDG);
- a fourth indication (98) selectively displayable on said first indication (67) and associated with the fact that said autopilot (25) has terminated said actual or simulated landing manoeuvre in spot hover conditions (LDG);
- a fifth indication (93, 94) selectively displayable on said first indication (67) and associated with the fact that said helicopter (1) has reached the ground and that said first flight control (15) is not yet in the position of minimum lift;
- a sixth indication (95) selectively displayable on said first indication (67) and associated with the fact that said helicopter (1) has reached the ground, that said first flight control (15) is in said position of minimum lift, and that said second flight control (16) is not yet in said neutral position; and
- a seventh indication (97) selectively displayable on said first indication (67) and associated with the fact that said helicopter (1) has reached the ground and that said second flight control (16) is in said neutral position.

2. The helicopter according to claim 1, **characterized in that** said first flight control (15) comprises, in turn:
- a lever (40) that can be operated to collectively adjust said first pitching angles of said first blades (8) of said first rotor (4); and
- a knob (41) comprising at least said button (43) operatively connected to said autopilot (25) and which can be operated to command said autopilot (25) to execute said descent and landing manoeuvre of said helicopter (1) in a spot hover condition (LDG).

3. The helicopter according to claim 1 or 2, **characterized in that** it comprises: a third physical or virtual sensor (30) configured to generate a fourth signal (S1) associated with a condition of contact of the helicopter with the ground;
said autopilot (25) being operatively connected to said first, second and third sensor (31, 32, 30);
said autopilot (25) being programmed to control said first, second and third flight control (15, 16, 17), so as to execute a descent and landing manoeuvre in spot hover conditions (LDG).

4. The helicopter according to any one of the foregoing claims, **characterized in that** it comprises:
- an eighth indication (72) adapted to provide the pilot with information associated with the direction angle defined between a first longitudinal axis (X) of said helicopter (1) and a second axis fixed with respect to the ground;
- a ninth indication (85, 86) associated with a first value of the distance between the coordinates of an actual position (Px, Py) of said helicopter (1) and the coordinates (Pxₛₑₜ, Pyₛₑₜ) of a target landing position;
- a tenth indication (87) associated with a second current value of the yaw angle (γ); and
- at least an eleventh and a twelfth indication (88, 89) associated with a third target value (γₛₑₜ) of the yaw angle (γ) ; said tenth, eleventh and twelfth indication (87; 88, 89) being displayable on said eighth indication (72).

5. The display device according to any one of the foregoing claims, **characterized in that** it further comprises:
- a thirteenth indication (70, 77) displayable laterally to said eighth indication (72) and associated with a fourth target value (RAₛₑₜ) of an altitude (RA) of said helicopter (1).
